# FASCICULE DE BREVET EUROPEEN

(11) **EP 2 768 778 B1**
(45) Date de publication et mention de la délivrance du brevet: **26.01.2022**
(21) Numéro de dépôt: 13710394.1
(22) Date de dépôt: 15.03.2013
(51) Int. Cl.: C02F 1/52, C02F 1/72, C02F 11/10, C02F 101/10, C02F 103/36

(54) **PROCEDE DE TRAITEMENT D'EFFLUENTS DE PRODUCTION D'UN COMPOSE AROMATIQUE DERIVE DE BENZENE DIHYDROXYLE**
VERFAHREN ZUR BEHANDLUNG VON PRODUKTIONSABFWÄSSERN EINER AROMATISCHEN VERBINDUNG AUS DIHYDROXYBENZOL
METHOD FOR TREATING PRODUCTION EFFLUENTS OF AN AROMATIC COMPOUND DERIVED FROM DIHYDROXYBENZENE

(30) Priorité: 16.03.2012 FR 1252415
(43) Date de publication de la demande: 27.08.2014
(73) Titulaire: RHODIA OPERATIONS, 93300 Aubervilliers (FR)
(72) Inventeur: GAREL, Laurent, F-69003 Lyon (FR); SATIER, Bertrand, F-38200 Jardin (FR)
(74) Mandataire: Jacques, Marie-Caroline Anne
(86) Numéro de dépôt international: PCT/EP2013/055453
(87) Numéro de publication internationale: WO 2013/135885

(56) Documents cités:
- CN-A- 102 126 777
- CN-A- 102 134 131

## Description

L'invention concerne un procédé de traitement d'une solution aqueuse (A) issue d'un procédé de production d'un composé aromatique dérivé de benzène dihydroxylé. L'invention concerne en particulier un procédé de traitement d'une solution aqueuse (A) issue d'un procédé de production de vanilline, d'éthylvanilline, ou d'un de leurs dérivés. L'invention concerne plus particulièrement le traitement de ladite solution aqueuse (A), laquelle comprend au moins un sel de sulfate SO₄²⁻ (S) solubilisé et au moins un composé organique aromatique (O) formé lors du procédé de production d'un composé aromatique dérivé de benzène dihydroxylé, et en particulier de vanilline, d'éthylvanilline ou d'un de leurs dérivés, avec la récupération d'un sel de sulfate (S) solide sous forme au moins partiellement anhydre séparément de la solution aqueuse (A), en particulier pour le valoriser.

### Etat de la technique

Un procédé de production industrielle de dérivés de benzène dihydroxylé, et en particulier de vanilline, d'éthylvanilline, ou d'un de leurs dérivés génère un certain nombre d'effluents, dont notamment des effluents aqueux comprenant au moins un composé organique aromatique et au moins un sel de sulfate.

On peut purifier les effluents aqueux d'un procédé de production de dérivés de benzène dihydroxylé, et en particulier de vanilline ou d'éthylvanilline ou d'un de leurs dérivés en précipitant le ou les sels de sulfate, par exemple en abaissant la température pour cristalliser le ou les sels de sulfate et séparer le ou les sels de sulfate des effluents.

A l'heure actuelle, les sels de sulfate ne sont généralement pas récupérés. Les effluents industriels présentent encore généralement de 2 à 15 % de sel de sulfate. Les procédés existants demandent à être améliorés du point de vue écologique et économique.

Le document CN 102134131 décrit un procédé de traitement d'une solution aqueuse issue d'un procédé de synthèse de vanilline dans lequel un sel de sulfate est cristallisé sous forme décahydrate. Cependant ce sel obtenu contient des impuretés notamment de type organique aromatique empêchant sa commercialisation.

### But de l'invention

L'invention a donc pour but principal de fournir un procédé industriel de traitement d'effluents aqueux issus d'un procédé de production de dérivés de benzène dihydroxylé, et en particulier de vanilline, d'éthylvanilline ou d'un de leurs dérivés, plus écologique et plus économique.

L'invention a notamment pour but de fournir un procédé permettant l'obtention d'une solution aqueuse comprenant moins de 2%, et encore de préférence moins de 1%, en poids de sel de sulfate.

On pourrait par exemple traiter les effluents d'un tel procédé en précipitant simplement le ou les sels de sulfate de manière classique, c'est-à-dire en diminuant la température d'une solution aqueuse diluée de sel de sulfate jusqu'à la précipitation du sel sous forme solide. Cependant lorsque le sel est issu d'une production industrielle de dérivés de benzène dihydroxylé, et en particulier de vanilline, d'éthylvanilline ou d'un de leurs dérivés, les impuretés, notamment de type organique aromatique, empêchent une commercialisation du sel de sulfate sans traitement supplémentaire de purification, ce que l'on souhaite éviter dans la présente invention.

Ainsi l'invention vise à améliorer la valorisation du ou des sels de sulfate, notamment, en diminuant les impuretés.

### Résumé de l'invention

Les inventeurs ont mis en évidence que l'on pouvait valoriser les sels de sulfate présents dans les effluents d'un procédé de synthèse de dérivés de benzène dihydroxylé, et en particulier de vanilline, d'éthylvanilline ou d'un de leurs dérivés de manière améliorée en récupérant directement au moins un sel de sulfate solide sous forme partiellement anhydre, et de préférence sous forme totalement anhydre.

Les inventeurs ont en effet constaté que, dans un procédé de production de dérivés de benzène dihydroxylé, et en particulier de vanilline, d'éthylvanilline ou d'un de leurs dérivés, les sels de sulfate ne peuvent pas être valorisés correctement sans l'obtention d'un sel de sulfate solide sous forme partiellement anhydre car le sel comprend sinon des impuretés organiques particulièrement difficiles à éliminer. En particulier on souhaite éviter l'obtention de la forme hydratée du sel de sulfate, et spécifiquement éviter la forme décahydratée du sel de sulfate de sodium.

La présente invention concerne un procédé de traitement d'une solution aqueuse (A) issue d'un procédé de production d'un composé de formule (I) : 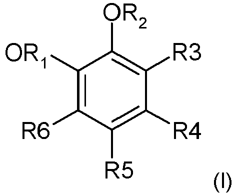 où R1 et R2 sont identiques ou différents et choisis parmi hydrogène et alkyl en C1-C5, ou R1 et R2 forment ensemble un groupe méthylène, et où R3, R4, R5, et R6, indépendamment identiques ou différents, sont choisis parmi : un atome d'hydrogène, un groupe hydroxy (-OH), un groupe alkoxy (-OR), un groupe alcool (-ROH), un groupe aldéhyde (-CHO), un groupe cétone (-C(=O)R), un groupe acide (-COOH), un groupe nitrile (-CN), une chaine alkyle en C1-C6, linéaire ou ramifiée, saturée ou insaturée, éventuellement comprenant un ou plusieurs substituants en position terminale ou latérale ou une ou plusieurs fonctions dans ladite chaine alkyle, R étant un alkyl en C1-C5, caractérisé en ce que la solution aqueuse (A) comprend au moins un sel de sulfate SO₄²⁻solubilisé (S) et au moins un composé organique aromatique (O) formé lors du procédé de production du composé (I), et caractérisé en ce que le procédé comprend au moins une étape (i) de récupération d'un sel de sulfate (S) solide sous forme au moins partiellement anhydre séparément de la solution aqueuse (A) et comprend au moins une étape (ii) de séparation ou d'élimination des composés organiques aromatiques (O) de la solution aqueuse (A), ledit procédé comprenant la mise en œuvre au moins une fois de ladite étape (i) et de ladite étape (ii) pour séparer au moins partiellement les composés organiques (O) et le sel de sulfate SO₄²⁻ (S) de la solution aqueuse (A), dans lequel l'étape (ii) d'élimination ou de séparation des composés organiques aromatiques (O) est réalisée avant l'étape (i) de récupération du sel de sulfate solide (S) sous forme au moins partiellement anhydre, dans lequel l'étape (ii) d'élimination ou de séparation des composés organiques aromatiques (O) comprend un traitement d'oxydation des composés organiques aromatiques (O) en composés organiques non aromatiques (NA), en présence d'un agent oxydant, et/ou un biotraitement par mise en contact des composés organiques aromatiques (O) en présence de bactéries dégradant lesdits composés organiques aromatiques (O), et/ou une étape d'adsorption des composés organiques aromatiques (O) sur du charbon actif, et/ou une ou plusieurs extractions liquide-liquide.

De préférence R3, R4, R5, et R6 ne sont pas simultanément l'atome d'hydrogène.

Comme substituants d'une chaine alkyle R3, R4, R5, et/ou R6, on peut citer les groupes hydroxy (-OH), alkoxy (-OR), alcool (-ROH), aldéhyde (-CHO), cétone (C(=O)R), acide (COOH), et nitrile (-CN).

Comme fonction dans une chaine R3, R4, R5, et/ou R6, on entend un groupe fonctionnel inclus dans la chaine R3 ; on peut citer les fonctions : éther, cétone, ester, amine, amide, azo, nitrile, thioéther, disulfure, et thiocétone.

La vanilline, l'éthylvanilline et leurs dérivés satisfont à la formule (I) décrite ci-dessus.

On peut également parler au sens de l'invention d'un procédé de purification d'un sel de sulfate sous forme solide, d'un procédé de purification des effluents d'un procédé de préparation de dérivés de benzène dihydroxylé, et en particulier de vanilline, d'éthylvanilline ou d'un dérivé de formule (I), ou encore d'un procédé de valorisation du sulfate, notamment issus d'un procédé industriel de préparation de dérivés de benzène dihydroxylé, et en particulier de vanilline, d'éthylvanilline ou d'un dérivé de formule (I). Ainsi lorsque l'on fait référence à un procédé de traitement, l'invention couvre également ces différents types de procédés, de manière indépendante.

### Description détaillée de l'invention

L'invention concerne en particulier un procédé de traitement d'une solution aqueuse issue d'un procédé de production d'un composé de formule (I) et en particulier de vanilline, d'éthylvanilline ou d'un dérivé, ladite solution comprenant au moins un sel de sulfate SO₄²⁻ solubilisé et au moins un composé organique aromatique, pour récupérer finalement une solution aqueuse dans laquelle le sel de sulfate et les composés organiques aromatiques ont été éliminés, et pour valoriser le sel de sulfate solide obtenu sous forme au moins partiellement anhydre, et de préférence totalement anhydre.

Selon une variante, R1 et R2 sont un atome d'hydrogène.

Selon une autre variante, R1 est un atome d'hydrogène et R2 est alkyl, et en particulier méthyl, éthyl, propyl, isopropyl, n-butyl, sec-butyl, ter-butyl, pentyl.

Selon une autre variante, R2 est un atome d'hydrogène et R1 est alkyl, et en particulier méthyl, éthyl, propyl, isopropyl, n-butyl, sec-butyl, ter-butyl, pentyl .

Selon une autre variante, R1 et R2 sont alkyl, et en particulier méthyl, éthyl, propyl, isopropyl, n-butyl, sec-butyl, ter-butyl, pentyl.

Selon une autre variante, R3, R4, R5, et R6, indépendamment identiques ou différents, sont choisis parmi : alkyl, et en particulier méthyl, éthyl, propyl, isopropyl, n-butyl, sec-butyl, ter-butyl, pentyl, hexyl, méthylène, éthylène, propylène, butylène, pentylène, hexylène, la double liaison pouvant être terminale ou incluse dans la chaine alkyle, entre les carbones C1-C2, C2-C3, C3-C4, ou C4-C5. Ces différents groupes alkyles et alcènes peuvent comprendre un ou plusieurs substituants en position terminale ou latérale et/ou une ou plusieurs fonctions, notamment tels que ceux précités.

Selon une variante, R3, R5, et R6 sont chacun un atome d'hydrogène, et R1, R2 et R4 sont tels que définis dans l'invention, incluant l'ensemble des variantes, préférences et modes de réalisation.

Les dérivés de vanilline ou d'éthylvanilline couvrent en particulier les composés de formules (I) où R3, R5, et R6 sont chacun un atome d'hydrogène, et R4 est un groupe aldéhyde (CHO), avec R1 et R2 tels que définis dans l'invention, incluant l'ensemble des variantes, préférences et modes de réalisation.

Les composés organiques aromatiques (O) sont typiquement des co-produits, des impuretés, ou des intermédiaires de la réaction ou d'enchainement de réactions produisant le composé de formule (I) et sont donc différents de la vanilline, de l'éthylvanilline ou du dérivé de formule (I), qui est généralement déjà récupéré lors d'une étape en amont du procédé objet de la présente invention. Les composés organiques aromatiques (O) sont généralement des produits de structure complexe et des dimères ou oligomères du composé (I). Par ailleurs, il est fait référence à la présence d'au moins un composé organique aromatique, mais il est évident que dans un procédé industriel plusieurs composés organiques aromatiques sont présents dans les effluents. C'est pour cela qu'il est fait référence de manière plus générale aux composés organiques aromatiques bien que cela couvre également la variante théorique où un seul composé organique aromatique serait présent dans l'effluent. Les effluents peuvent contenir de la vanilline, de l'éthylvanilline ou un dérivé de formule (I) mais en général en quantité négligeable.

Les procédés de synthèse industrielle de vanilline utilisent notamment comme composé de départ l'acide glyoxylique et le gaïacol, et les procédés de synthèse industrielle de l'éthylvanilline utilisent notamment le l'acide glyoxylique et guéthol comme composé de départ.

Dans la présente description il est fait référence par simplicité à la récupération d'un sel de sulfate, mais l'invention couvre la récupération des sels de sulfate présents si plusieurs sels de sulfate sont présents dans les effluents. Selon une variante ces différents sels de sulfates peuvent être récupérés séparément dans la mesure où leurs limites de solubilité dans la solution aqueuse sont différentes. Certains sels ou l'ensemble des sels peuvent être récupérés ensemble, selon une autre variante.

Typiquement le sel de sulfate est sous forme de sulfate de sodium ou de potassium, mais l'invention couvre également tous les autres sels de sulfate pouvant être solides et au moins partiellement anhydres à température ambiante. Ce peut être des sels de sulfate d'ammonium, ou de métal alcalin ou alcalino-terreux, et en particulier de lithium, de césium, de calcium, de magnésium, de baryum, de sodium, de potassium, ou l'un quelconque de leurs mélanges.

Généralement les effluents sont des solutions aqueuses. C'est pour cela qu'il est fait référence à une solution aqueuse (A) dans la présente description, mais cela couvre une solution aqueuse comprenant des composés organiques divers, issus en particulier de la production de dérivés de benzène dihydroxylé, et en particulier de vanilline, d'ethylvanilline ou de leurs dérivés de formule (I). La solution aqueuse peut être monophasique ou biphasique liquide/liquide, et peut éventuellement contenir des solides en suspension, et en particulier le sel de sulfate solide.

Selon une variante, l'étape (i) de récupération du sel de sulfate solide (S) sous forme au moins partiellement anhydre comprend la concentration (ia) des ions sulfates dans ladite solution aqueuse (A) par élimination ou séparation d'au moins une partie de l'eau de la solution aqueuse (A), ladite concentration (ia) étant réalisée à une température supérieure à la température limite de solubilité du sel de sulfate dans la solution aqueuse (A), et de préférence à une température supérieure à 40°C, et de préférence supérieure à 45°C, et encore de préférence supérieure à 50°C.

Selon un mode de réalisation préférée, la température de la solution aqueuse (A) est à une température avant traitement, dite température de fin de production, supérieure à 40°C, et de préférence supérieure à 50°C, et encore de préférence supérieure à 60°C, et en ce que la concentration selon l'étape (ia) est effectuée à la température de fin de production ou à une température voisine, telle qu'une température égale à celle de fin de production plus ou moins 20°C, et de préférence plus ou moins 10°C, mais supérieure à 40°C.

En particulier, la solution aqueuse (A) peut être récupérée en sortie de procédé de production du composé (I) et peut donc être avantageusement traitée à la température de production, dite température de fin de production ou à une température voisine, telle qu'une température égale à celle de fin de production plus ou moins 20°C, et de préférence plus ou moins 10°C.

Avantageusement, l'étape (i) de récupération du sel de sulfate solide (S) sous forme au moins partiellement anhydre comprend : (ia) une concentration des ions sulfates dans la solution aqueuse (A), (ib) une cristallisation/précipitation du sel de sulfate solide (S) sous forme au moins partiellement anhydre, (ic) la séparation du sel de sulfate solide (S) au moins partiellement anhydre de la solution aqueuse (A), et (id) la récupération du sel de sulfate solide (S) au moins partiellement anhydre, lesdites étapes (ia), (ib) et (ic) étant réalisées à une température supérieure à la température limite de solubilité du sel de sulfate dans la solution aqueuse (A).

De préférence la concentration (ia) des ions sulfates est réalisée par évaporation d'au moins une partie de l'eau de la solution aqueuse (A).

Avantageusement, on peut également réaliser la cristallisation/précipitation (ib) à la température de fin de production de la solution aqueuse (A) ou à une température voisine, telle qu'une température égale à celle de fin de production plus ou moins 20°C, et de préférence plus ou moins 10°C.

Selon un mode de réalisation, la séparation et la récupération (ic) est réalisée par filtration. Cette filtration peut être réalisée par filtration solide/liquide sur une membrane, un médiat filtrant métallique ou média filtrant organique textile tissé, permettant de retenir le sel de sulfate solide (S).

Selon une variante préférée, le sel de sulfate est obtenu sous forme anhydre, et par exemple sous forme de sulfate de sodium anhydre.

Le procédé de l'invention peut avantageusement générer de 2 à 15 kg de sels, et avantageusement de sel de sulfate de sodium solide anhydre, pour 100L d'effluent traité. Le procédé de l'invention comprend au moins une étape (ii) de séparation ou d'élimination des composés organiques aromatiques (O) de la solution aqueuse (A), ledit procédé comprenant la mise en œuvre au moins une fois de ladite étape (i) et de ladite étape (ii)pour séparer au moins partiellement les composés organiques (O) et le sel de sulfate SO₄²⁻ (S) de la solution aqueuse (A), dans lequel l'étape (ii) d'élimination ou de séparation des composés organiques aromatiques (O) est réalisée avant l'étape (i) de récupération du sel de sulfate solide (S) sous forme au moins partiellement anhydre.

Un but est d'éliminer au maximum les composés organiques aromatiques (O) et le sel de sulfate (S) de la solution aqueuse (A). L'invention couvre également l'obtention d'une solution aqueuse dans laquelle les composés organiques aromatiques (O) et/ou le ou les sels de sulfate (S) seraient simplement partiellement éliminés ou récupérés. On parle également de solution sans composés organiques aromatiques ou sans ions sulfate, ou encore de solution dans lesquels les composés organiques aromatiques et/ou les ions sulfate sont « éliminés ». Ces significations sont équivalentes à celles ci-dessus et donc nullement limitatives à une absence totale de ces substances dans la solution aqueuse. Au contraire, les composés organiques aromatiques et/ou les ions sulfate peuvent être encore présents en quantités importantes dans la solution aqueuse, après traitement. Toutefois le but de ces étapes est de séparer de manière convenable les composés organiques aromatiques (O) et/ou le ou les sels de sulfate (S) de la solution aqueuse (A).

On entend par solution (A-S) une solution ayant fait l'objet d'une étape de séparation au moins partielle des ions sulfate (S) présents initialement dans la solution aqueuse (A). On préfère une solution (A-S) dans laquelle les ions sulfate (S) sont présents à moins de 2% en poids par rapport au poids total de la solution.

On entend par solution (A-O) une solution ayant fait l'objet d'une étape de séparation ou d'élimination au moins partielle des composés organiques aromatiques (O) présents initialement dans la solution aqueuse (A). On préfère une solution (A-O) présentant une DCO (Demande Chimique en Oxygène) inférieure à 10 g par litre. Le procédé selon la présente invention permet de satisfaire une telle exigence.

On entend par solution (A-O-S) une solution ayant fait l'objet d'une étape séparation ou d'élimination au moins partielle des composés organiques aromatiques (O) et des ions sulfate (S). Cette solution est généralement une solution d'eau plus ou moins purifiée.

Ainsi, selon un mode de réalisation particulier, l'invention concerne un procédé de traitement d'une solution aqueuse (A) d'un procédé de production d'un composé de formule (I) : 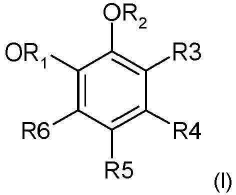 où R1, R2, R3, R4, R5, et R6 sont tels que définis précédemment, ledit procédé étant caractérisé en ce qu'il comprend :
- au moins une étape (i) de récupération du sel de sulfate solide (S) sous forme au moins partiellement anhydre pour récupérer le sel de sulfate solide (S) séparément de la solution aqueuse (A), ladite étape (i) comprenant une étape de séparation au moins partielle des ions sulfate sous forme d'un sel solide au moins partiellement anhydre de la solution aqueuse (A),
- la récupération d'une solution (A-S) ayant fait l'objet de l'étape de séparation au moins partielle des ions sulfate,
- au moins une étape (ii) d'élimination ou de séparation des composés organiques aromatiques (O) de la solution aqueuse (A) pour éliminer ou séparer les composés organiques (O) de la solution aqueuse (A), et
- la récupération d'une solution (A-O) ayant fait l'objet de l'étape (ii) de séparation ou d'élimination au moins partielle des composés organiques aromatiques, ledit procédé comprenant la mise en œuvre au moins une fois de ladite étape (i) et de ladite étape (ii), pour récupérer finalement une solution aqueuse (A-O-S) dans laquelle le sel de sulfate (S) et les composés organiques aromatiques (O) ont été éliminés ou séparés au moins partiellement.

L'invention couvre la répétition des étapes (i) et (ii), chacune pouvant être effectuée successivement, et/ou de manière répétée.

Selon le procédé de l'invention, l'étape (ii) d'élimination ou de séparation des composés organiques aromatiques (O) est réalisée avant l'étape (i) de récupération du sel de sulfate solide (S) sous forme au moins partiellement anhydre.

Selon une autre variante, au moins une étape (ii) d'élimination ou de séparation des composés organiques aromatiques (O) est réalisée avant une étape (i) de récupération du sel de sulfate solide (S) sous forme au moins partiellement anhydre et au moins une étape (ii) est réalisée après l'étape (i).

De préférence, l'étape (ii) d'élimination des composés organiques aromatiques (O) comprend un traitement d'oxydation des composés organiques aromatiques (O) en composés organiques non aromatiques (NA), par exemple jusqu'à la production de CO₂, en présence d'un agent oxydant, qui est de préférence H₂O₂, mais qui peut être un autre agent oxydant comme l'oxygène, ledit traitement d'oxydation étant de préférence réalisé en présence d'UV.

On préfère réaliser ladite étape d'oxydation par un traitement d'oxydation avancée (AOP - Advanced Oxidation Process) en présence d'O₂ et/ou de H₂O₂ et d'UV ou un traitement dit « Fenton » comprenant l'oxydation des composés organiques aromatiques (O) en composés organiques non aromatiques (NA), par exemple jusqu'à la production de CO₂, en présence d'un agent oxydant et éventuellement de fer (II) et/ou fer (III).

Selon une variante avantageuse, l'étape (ii) d'élimination des composés organiques aromatiques (O) comprend un biotraitement par mise en contact des composés organiques aromatiques (O) en présence de bactéries ou enzymes dégradant lesdits composés organiques aromatiques (O). Parmi les bactéries et enzymes utilisables ont peut citer sans être exhaustif : *Pseudomonas Putida, Pseudomonas mendocina, Pseudomonas putida, Comonas, Anthrobacter sp., Aspergillus niger,* mandelate dehydrogenase, benzoyldecarboxylase, vanillyl dehydrogenase, des toluène monooxygenase, catechol-1,2-dioxygenase, catechol-2,3-dioxygenase, la procatechuate-3,4-dioxygenase, procatechuate decarboxylate, etc.

Selon une autre variante avantageuse, l'étape (ii) d'élimination ou de séparation des composés organiques aromatiques (O) comprend une étape d'adsorption des composés organiques aromatiques (O) sur du charbon actif.

Selon une autre variante avantageuse, l'étape (ii) d'élimination ou de séparation des composés organiques aromatiques (O) peut comprendre une ou plusieurs extractions liquide-liquide.

Ces deux variantes peuvent être combinées pour éliminer ou séparer au mieux les composés organiques aromatiques (O).

Selon un mode de réalisation, le procédé peut comprendre une étape d'ajustement du pH de la solution aqueuse (A) à une valeur inférieure à 7, et de préférence entre 2 et 6.

Selon un autre mode de réalisation, le procédé comprend une étape d'ajustement du pH de la solution aqueuse (A) à une valeur supérieure à 8, et de préférence entre 9 et 12.

L'invention couvre de préférence un procédé comprenant :
a1) éventuellement l'ajustement du pH de la solution aqueuse (A) comprenant au moins un sel de sulfate SO₄²⁻ solubilisé et au moins un composé organique aromatique, à une valeur inférieure à 7, et de préférence entre 2 et 6,
b1) l'élimination ou la séparation des composés organiques aromatiques (O) par au moins un traitement d'oxydation des composés organiques aromatiques (O) en composés organiques non aromatiques (NA), par exemple jusqu'à la production de CO₂, en présence d'un agent oxydant, qui est de préférence H₂O₂, ou par au moins un traitement d'adsorption sur un substrat, par exemple sur du charbon actif, pour obtenir une solution (A-O),
c1) la concentration des ions sulfates dans la solution (A-O) issue de l'étape b1), la cristallisation/précipitation du sel de sulfate solide (S) sous forme au moins partiellement anhydre à une température supérieure à la température limite de solubilité du sel de sulfate dans la solution aqueuse (A-O), la séparation et la récupération du sel de sulfate solide (S) au moins partiellement anhydre, et la récupération d'une solution (A-O-S),
d1) éventuellement l'élimination ou la séparation des composés organiques aromatiques (O) résiduels dans la solution aqueuse (A-O-S) issue de l'étape c1) par un biotraitement par mise en contact des composés organiques aromatiques (O) résiduels en présence de bactéries dégradant lesdits composés organiques aromatiques (O), ou l'élimination ou la séparation des composés organiques aromatiques (O) résiduels dans la solution aqueuse (A-O-S) issue de l'étape c1) par au moins un traitement d'oxydation des composés organiques aromatiques (O) en composés organiques non aromatiques (NA), par exemple jusqu'à la production de CO₂, en présence d'un agent oxydant, qui est de préférence H2O2,
e1) éventuellement l'ajustement du pH de la solution aqueuse (A-O-S) issue de l'étape c1), éventuellement d1), à une valeur comprise entre 6 et 8.

Avantageusement, l'étape (c1) de cristallisation/précipitation du sel de sulfate comprend éventuellement une évaporation-concentration de la solution aqueuse et une cristallisation du sel de sulfate. On peut réaliser évaporation-concentration de la solution aqueuse et une cristallisation du sel de sulfate en une seule étape. Avantageusement, un ou plusieurs traitements d'élimination ou de séparation des composés organiques aromatiques (O) peuvent être prévus entre l'évaporation et la cristallisation du sel de sulfate.

L'invention couvre également un procédé comprenant :
a2) éventuellement l'ajustement du pH de la solution aqueuse (A) comprenant au moins un sel de sulfate SO₄²⁻ solubilisé et au moins un composé organique aromatique, à une valeur de pH acide, basique, ou neutre,
b2) la concentration des ions sulfates dans la solution aqueuse (A), la cristallisation/précipitation du sel de sulfate solide (S) sous forme au moins partiellement anhydre à une température supérieure à la température limite de solubilité du sel de sulfate dans la solution aqueuse (A), et la séparation et la récupération du sel de sulfate solide (S) au moins partiellement anhydre, et la récupération d'une solution (A-S),
c2) l'élimination ou la séparation des composés organiques aromatiques (O) de la solution (A-S) issue de l'étape b2) par au moins un traitement d'oxydation des composés organiques aromatiques (O) en composés organiques non aromatiques (NA), par exemple jusqu'à la production de CO2, en présence d'un agent oxydant, qui est de préférence H2O2, ou par au moins un traitement d'adsorption sur un substrat, par exemple sur du charbon actif, et la récupération d'une solution (A-O-S), et
d2) éventuellement l'ajustement du pH de la solution aqueuse (A-O-S) issue de l'étape c2) à une valeur comprise entre 6 et 8.

L'invention couvre également un procédé comprenant :
a3) éventuellement l'ajustement du pH de la solution aqueuse (A) comprenant au moins un sel de sulfate SO₄²⁻ solubilisé et au moins un composé organique aromatique (O), à une valeur de pH acide, basique, ou neutre,
b3) la concentration des ions sulfates dans la solution aqueuse (A), la cristallisation/précipitation du sel de sulfate solide (S) sous forme au moins partiellement anhydre à une température supérieure à la température limite de solubilité du sel de sulfate dans la solution aqueuse (A),
c3) la récupération d'une solution aqueuse comprenant un sel de sulfate solide (S) sous forme au moins partiellement anhydre,
d3) l'incinération ou le traitement thermique à haute température (supérieure à 250°C, et de préférence supérieure à 300°C) de la solution aqueuse issue de l'étape c3) pour éliminer l'eau de la solution aqueuse (A) et au moins partiellement les composés organiques (O), et la récupération d'un sel de sulfate SO₄²⁻ (S) solide sous forme anhydre. Selon une variante, ledit procédé comprend éventuellement à l'étape c3) la séparation du sel de sulfate solide (S) au moins partiellement anhydre de la solution aqueuse pour obtenir une solution concentrée à plus de 40%, et de préférence à plus de 45%, en poids de sel de sulfate, et l'incinération ou le traitement thermique à haute température (supérieure à 250°C, et de préférence supérieure à 300°C) de la solution concentrée pour éliminer l'eau et au moins partiellement les composés organiques (O), et la récupération d'un sel de sulfate SO₄²⁻ (S) solide sous forme anhydre.

Selon une autre variante, ledit procédé comprend éventuellement à l'étape c3) la séparation du sel de sulfate solide (S) au moins partiellement anhydre de la solution aqueuse pour obtenir d'une part une solution concentrée à plus de 40%, et de préférence à plus de 45%, en poids de sel de sulfate et d'autre part une solution moins concentrée contenant moins de 40% de sel de sulfate, puis la séparation du sel de sulfate solide (S) au moins partiellement anhydre de la solution concentrée pour récupérer un sel de sulfate SO₄²⁻ (S) solide sous forme anhydre, et l'incinération ou le traitement thermique à haute température (supérieure à 250°C, et de préférence supérieure à 300°C) de la solution moins concentrée pour éliminer l'eau et au moins partiellement les composés organiques (O), et la récupération d'un sel de sulfate SO₄²⁻ (S) solide sous forme anhydre.

La présente invention est particulièrement intéressante car un procédé de production industrielle de dérivés de benzène dihydroxylé, et en particulier de vanilline, d'éthylvanilline ou de leurs dérivés de formule (I) peut générer une quantité d'effluents de plusieurs tonnes par heure. Ainsi la valorisation selon l'invention du ou des sels de sulfate, et en particulier du sulfate de sodium, limite les coûts du procédé et permet même de valoriser à moindre coût ce ou ces sels co-produits lors de la synthèse de dérivés de benzène dihydroxylé, et en particulier de vanilline, d'éthylvanilline ou de leurs dérivés de formule (I). Par ailleurs, le procédé de l'invention est avantageux du point de vue écologique puisqu'il élimine les composés organiques aromatiques par exemple jusqu'à la production de CO2, valorise les sels de sulfate sous forme solide purifiée, et produit éventuellement un effluent aqueux purifié, généralement sous forme d'eau industrielle ou que l'on peut rejeter suivant les normes en vigueur.

Selon une variante de l'invention les composés organiques aromatiques séparés sont valorisés ou utilisés ultérieurement. Par exemple après adsorption les composés organiques aromatiques sont dé-sorbés, avec de préférence une régénération de l'adsorbant utilisé.

### Exemples

Les pourcentages sont donnés en poids par rapport au poids de la composition totale. Les températures sont données en degré Celsius (°C).

### Exemple 1 Adsorption, concentration, isolement de Na2SO4 anhydre et traitement de Fenton du filtrat

100 L/h d'effluent aqueux obtenu du procédé de synthèse de la vanilline à partir d'acide glyoxylique (DCO = 9 g/L, teneur en Na2SO4 de 8.5%) est introduit sur une colonne contenant du charbon BGX (acheté chez CECA) et maintenue à 60°C ; le temps de séjour est de 1h. Le pH peut être neutre, acide ou basique selon le charbon utilisé. Cet effluent contient du sulfate de sodium solubilisé et divers composés organiques aromatiques. On obtient à la sortie de cette colonne, un effluent ayant une DCO de 3.9 g/L, illustrant ainsi la séparation d'une quantité importante de composés organiques aromatiques, que l'on peut soit éliminer soit récupérer par régénération de la colonne par un traitement adéquat. La solution aqueuse contenant le sulfate solubilisé est alors concentrée dans un évaporateur multi-effet (triple-effet) jusqu'à ce que le volume atteigne 33 L/h. La solution ainsi concentrée notamment en ions sulfates est envoyée dans un cristallisoir à 60°C puis dans un épaississeur qui permet de générer :
- une solution aqueuse qui est recyclée dans le cristallisoir (7,2 L/h, contenant 31% de Na2SO4),
- une solution aqueuse très concentrée en ions sulfate (contenant 85% de Na2SO4), appelée « bouillie ».

La bouillie est envoyée dans une essoreuse à 60°C et qui permet de séparer 8,1 kg de sulfate de sodium anhydre sous forme d'un solide blanc (gâteau) pour 100L d'effluent.

Le sulfate de sodium anhydre peut être valorisé en l'état, avantageusement sans traitement supplémentaire.

La solution aqueuse récupérée en sortie d'essoreuse, appelée jus-mère ou filtrat, est regroupée avec l'eau évaporée du triple-effet et du cristallisoir pour générer un flux de 91L possédant une DCO de 3,4 g/L qui est traitée en continu dans un réacteur à 80°C durant 5h par 2000 g/h d'eau oxygénée 30% p/p et 100g/h de sulfate de fer (II) heptahydraté. Ce traitement permet d'obtenir une solution aqueuse possédant une DCO de 265 mg/L et 5000 ppm de Na2SO4.

### Exemple 2 Traitement d'oxydation, concentration, isolement Na2SO4 anhydre et biotraitement du filtrat

100 L/h d'effluent aqueux, contenant du sulfate de sodium solubilisé et divers composés organiques aromatiques, obtenu du procédé de synthèse de la vanilline à partir de l'acide glyoxylique (DCO = 10 g/L, teneur en Na2SO4 de 5,7%) est préalablement traité par de l'acide sulfurique pour amener le pH à 5 avant d'être traité à 60°C dans un réacteur UV (équipé d'une lampe Hg basse pression d'une puissance de 18 W) par ajout d'eau oxygénée 30% p/p (dans cet exemple, il n'est pas ajouté de sulfate ferreux mais il est possible de le faire). L'ajout de 1,4 équivalent molaire de H2O2 30% permet de diminuer la DCO à 1,5 g/L.

Cette solution aqueuse est alors concentrée dans un évaporateur multi-effet (triple-effet) jusqu'à ce que le volume atteigne 34 L/h. La solution ainsi concentrée est envoyée dans un cristallisoir à 60°C puis dans un épaississeur qui permet de générer :
- une solution aqueuse qui est recyclée dans le cristallisoir (6,7 L/h, contenant 31% de Na2SO4)
- une solution aqueuse très concentrée en ions sulfate, appelée « bouillie ».

La bouillie est envoyée dans une essoreuse à 60°C, ce qui permet de séparer 5,2 kg de sulfate de sodium anhydre sous forme d'un solide blanc (gâteau) pour 100L d'effluent.

Le sulfate de sodium anhydre peut être valorisé en l'état, avantageusement sans traitement supplémentaire.

La solution aqueuse récupérée en sortie d'essoreuse, appelée jus-mère ou filtrat, est regroupée avec l'eau évaporée du triple-effet et du cristallisoir pour générer un flux de 94,5L possédant une DCO de 0,94 g/L qui est traité biochimiquement en continu à l'aide de souches microbiennes. La DCO résultante est de 285 mg/L et 6000 ppm de Na2SO4.

### Exemple 3, Concentration, isolement de Na2SO4 anhydre

100 L/h d'effluent aqueux, contenant du sulfate de sodium solubilisé et divers composés organiques aromatiques, obtenu du procédé de synthèse de la vanilline à partir d'acide glyoxylique (DCO = 7 g/L, teneur en Na2SO4 de 4%) est introduit dans un évaporateur multi-effet (triple-effet) pour être concentrée jusqu'à ce que le volume atteigne 35 L/h. La solution ainsi concentrée notamment en ions sulfates est envoyée dans un cristallisoir à 60°C puis dans un épaississeur qui permet de générer :
- une solution aqueuse qui est recyclée dans le cristallisoir (5,0 L/h, contenant 31% de Na2SO4),
- une solution aqueuse très concentrée en ions sulfate (contenant 78% de Na2SO4), appelée « bouillie ».

La bouillie est envoyée dans un incinérateur à 500°C pendant une durée suffisante pour dégrader les composés organiques aromatiques, et qui permet de récupérer 4 kg de sulfate de sodium anhydre sous forme d'un solide de couleur essentiellement blanche pour 100L d'effluent. Des scories peuvent être présentes et éliminées selon les connaissances de l'homme de l'art (séchoir, etc.) pour obtenir le sel solide blanc.

Le sulfate de sodium anhydre peut être valorisé en l'état, avantageusement sans traitement supplémentaire.

Ce traitement permet d'éviter le traitement ultérieur et le rejet d'une solution aqueuse.

### Exemple 4 Concentration, isolement de Na2SO4

100 L/h d'effluent aqueux, contenant du sulfate de sodium solubilisé et divers composés organiques aromatiques, obtenu du procédé de synthèse de la vanilline à partir d'acide glyoxylique (DCO = 7 g/L, teneur en *Na2SO4* de 4%) est introduit dans un évaporateur multi-effet (triple-effet) pour être concentré jusqu'à ce que le volume atteigne 35 L/h. La solution ainsi concentrée notamment en ions sulfates est envoyée dans un cristallisoir à 60°C puis dans un épaississeur qui permet de générer :
- une solution aqueuse qui est recyclée dans le cristallisoir (5,0 L/h, contenant 31% de Na2SO4),
- une solution aqueuse très concentrée en ions sulfate (contenant 78% de Na2SO4), appelée « bouillie ».

La bouillie est envoyée dans une essoreuse à 60°C et qui permet de séparer 3,6 kg de sulfate de sodium anhydre sous forme d'un solide blanc (gâteau) pour 100L d'effluent.

Le sulfate de sodium anhydre peut être valorisé en l'état, avantageusement sans traitement supplémentaire.

La solution aqueuse récupérée en sortie d'essoreuse, appelée jus-mère ou filtrat, est envoyée dans un incinérateur à 500°C pendant une durée suffisante pour dégrader les composés organiques aromatiques, et qui permet de récupérer 0,4 kg de sulfate de sodium anhydre de couleur essentiellement blanche. Des scories peuvent être présentes et éliminées selon les connaissances de l'homme de l'art (séchoir, etc.).

### Exemple 5 Adsorption, concentration, isolement de Na2SO4 anhydre

100 L/h d'effluent aqueux obtenu du procédé de synthèse de la vanilline à partir d'acide glyoxylique (DCO = 8 g/L, teneur en Na2SO4 de 9%) est introduit sur une colonne contenant du charbon BGX (acheté chez CECA) et maintenue à 60°C ; le temps de séjour est de 1h. Le pH peut être neutre, acide ou basique selon le charbon utilisé. Cet effluent contient du sulfate de sodium solubilisé et divers composés organiques aromatiques. On obtient à la sortie de cette colonne, un effluent ayant une DCO de 3.5 g/L, illustrant ainsi la séparation d'une quantité importante de composés organiques aromatiques, que l'on peut soit éliminer soit récupérer par régénération de la colonne par un traitement adéquat. La solution aqueuse contenant le sulfate solubilisé est alors concentrée dans un évaporateur multi-effet (triple-effet) jusqu'à ce que le volume atteigne 33 L/h. La solution ainsi concentrée notamment en ions sulfates est envoyée dans un cristallisoir à 60°C puis dans un épaississeur qui permet de générer :
- une solution aqueuse qui est recyclée dans le cristallisoir (7,2 L/h, contenant 31% de Na2SO4),
- une solution aqueuse très concentrée en ions sulfate (contenant 85% de Na2SO4), appelée « bouillie ».

La bouillie est envoyée dans une essoreuse à 60°C et qui permet de séparer 8,6 kg de sulfate de sodium anhydre sous forme d'un solide blanc (gâteau) pour 100L d'effluent.

Le sulfate de sodium anhydre peut être valorisé en l'état, avantageusement sans traitement supplémentaire.

La solution aqueuse récupérée en sortie d'essoreuse, appelée jus-mère ou filtrat, est incinérée à une température supérieure à 300°C. Le flux aqueux issu dans la section "évapo-concentration" et du cristallisoir est de 91L et possède une DCO de 300 mg/L et aucun sulfate.

### Exemple 6 Traitement d'oxydation, concentration, isolement Na2SO4 anhydre

100 L/h d'effluent aqueux, contenant du sulfate de sodium solubilisé et divers composés organiques aromatiques, obtenu du procédé de synthèse de la vanilline à partir de l'acide glyoxylique (DCO = 9,5 g/L, teneur en Na2SO4 de 6,5%) est préalablement traité par de l'acide sulfurique pour amener le pH à 5 avant d'être traité à 50°C dans un réacteur UV (équipé d'une lampe Hg basse pression d'une puissance de 18 W) par ajout d'eau oxygénée 30% p/p (dans cet exemple, il n'est pas ajouté de sulfate ferreux mais il est possible de le faire). L'ajout de 0,8 équivalent molaire de H2O2 30% (/DCO) permet de diminuer la DCO à 2 g/L.

Cette solution aqueuse est alors concentrée dans un évaporateur multi-effet (triple-effet) jusqu'à ce que le volume atteigne 35 L/h. La solution ainsi concentrée est envoyée dans un cristallisoir à 60°C puis dans un épaississeur qui permet de générer :
- une solution aqueuse qui est recyclée dans le cristallisoir (8 kg/h)
- une solution aqueuse très concentrée en ions sulfate, appelée « bouillie ».

La bouillie est envoyée dans une essoreuse à 60°C, ce qui permet de séparer 5,9 kg de sulfate de sodium anhydre sous forme d'un solide blanc (gâteau) pour 100L d'effluent. Le sulfate de sodium anhydre peut être valorisé en l'état, avantageusement sans traitement supplémentaire.

La solution aqueuse récupérée en sortie d'essoreuse, appelée jus-mère ou filtrat, est incinérée à une température supérieure à 300°C. Le flux aqueux issu de la section "évapo-concentration" et du cristallisoir est de 93,5L et possède une DCO de 350 mg/L et aucun sulfate.

## Revendications

1. Procédé de traitement d'une solution aqueuse (A) issue d'un procédé de production d'un composé de formule (I) : 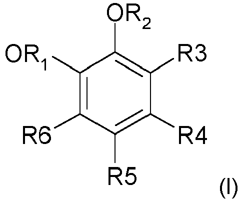 où R1 et R2 sont identiques ou différents et choisis parmi hydrogène et alkyl en C1-C5, ou R1 et R2 forment ensemble un groupe méthylène, et où R3, R4, R5, et R6, indépendamment identiques ou différents, sont choisis parmi : un atome d'hydrogène, un groupe hydroxy (-OH), un groupe alkoxy (-OR), un groupe alcool (-ROH), un groupe aldéhyde (-CHO), un groupe cétone (-C(=O)R), un groupe acide (-COOH), un groupe nitrile (-CN), une chaine alkyle en C1-C6, linéaire ou ramifiée, saturée ou insaturée, éventuellement comprenant un ou plusieurs substituants en position terminale ou latérale ou une ou plusieurs fonctions dans ladite chaine alkyle, R étant un alkyl en C1-C5, **caractérisé en ce que** la solution aqueuse (A) comprend au moins un sel de sulfate SO₄²⁻ (S) solubilisé et au moins un composé organique aromatique (O) formé lors du procédé de production du composé (I), et **caractérisé en ce que** le procédé comprend au moins une étape (i) de récupération d'un sel de sulfate (S) solide sous forme au moins partiellement anhydre séparément de la solution aqueuse (A) et comprend au moins une étape (ii) de séparation ou d'élimination des composés organiques aromatiques (O) de la solution aqueuse (A), ledit procédé comprenant la mise en œuvre au moins une fois de ladite étape (i) et de ladite étape (ii) pour séparer au moins partiellement les composés organiques (O) et le sel de sulfate SO₄²⁻ (S) de la solution aqueuse (A), dans lequel l'étape (ii) d'élimination ou de séparation des composés organiques aromatiques (O) est réalisée avant l'étape (i) de récupération du sel de sulfate solide (S) sous forme au moins partiellement anhydre, dans lequel l'étape (ii) d'élimination ou de séparation des composés organiques aromatiques (O) comprend un traitement d'oxydation des composés organiques aromatiques (O) en composés organiques non aromatiques (NA), en présence d'un agent oxydant, et/ou un biotraitement par mise en contact des composés organiques aromatiques (O) en présence de bactéries dégradant lesdits composés organiques aromatiques (O), et/ou une étape d'adsorption des composés organiques aromatiques (O) sur du charbon actif, et/ou une ou plusieurs extractions liquide-liquide.

2. Procédé selon l'une quelconque des revendications précédentes, **caractérisé en ce que** l'étape (i) de récupération du sel de sulfate solide (S) sous forme au moins partiellement anhydre comprend la concentration (ia) des ions sulfates dans ladite solution aqueuse (A) par élimination ou séparation d'au moins une partie de l'eau de la solution aqueuse (A), ladite concentration (ia) étant réalisée à une température supérieure à la température limite de solubilité du sel de sulfate dans la solution aqueuse (A), et de préférence à une température supérieure à 40°C, et de préférence supérieure à 45°C, et encore de préférence supérieure à 50°C.

3. Procédé selon l'une quelconque des revendications précédentes, caractérisé en ce la température de la solution aqueuse (A) est à une température avant traitement, dite température de fin de production, supérieure à 40°C, et de préférence supérieure à 45°C, et encore de préférence supérieure à 50°C, et en ce que la concentration selon l'étape (ia) est effectuée à la température de fin de production plus ou moins 20°C, et de préférence plus ou moins 10°C, mais supérieure à 40°C.

4. Procédé selon l'une quelconque des revendications précédentes, **caractérisé en ce que** l'étape (i) de récupération du sel de sulfate solide (S) sous forme au moins partiellement anhydre comprend : (ia) une concentration des ions sulfates dans la solution aqueuse (A), (ib) une cristallisation/précipitation du sel de sulfate solide (S) sous forme au moins partiellement anhydre, (ic) la séparation du sel de sulfate solide (S) au moins partiellement anhydre de la solution aqueuse (A), et (id) la récupération du sel de sulfate solide (S) au moins partiellement anhydre, lesdites étapes (ia), (ib) et (ic) étant réalisées à une température supérieure à la température limite de solubilité du sel de sulfate dans la solution aqueuse (A).

5. Procédé selon l'une quelconque des revendications 1 à 4, **caractérisé en ce qu'**il comprend :
- au moins une étape (i) de récupération du sel de sulfate solide (S) sous forme au moins partiellement anhydre pour récupérer le sel de sulfate solide (S) séparément de la solution aqueuse (A), ladite étape (i) comprenant une étape de séparation au moins partielle des ions sulfate sous forme d'un sel solide au moins partiellement anhydre de la solution aqueuse (A),
- la récupération d'une solution (A-S) ayant fait l'objet de l'étape de séparation au moins partielle des ions sulfate,
- au moins une étape (ii) d'élimination ou de séparation des composés organiques aromatiques (O) de la solution aqueuse (A) pour éliminer ou séparer les composés organiques (O) de la solution aqueuse (A), et
- la récupération d'une solution (A-O) ayant fait l'objet de l'étape (ii) de séparation ou d'élimination au moins partielle des composés organiques aromatiques,
ledit procédé comprenant la mise en œuvre au moins une fois de ladite étape (i) et de ladite étape (ii) pour récupérer finalement une solution aqueuse (A-O-S) dans laquelle le sel de sulfate (S) et les composés organiques aromatiques (O) ont été éliminés ou séparés au moins partiellement, **caractérisé en ce que** l'étape (ii) d'élimination ou de séparation des composés organiques aromatiques (O) est réalisée avant l'étape (i) de récupération du sel de sulfate solide (S) sous forme au moins partiellement anhydre.

6. Procédé selon l'une quelconque des revendications 4 à 5, **caractérisé en ce que** l'étape (ii) d'élimination ou de séparation des composés organiques aromatiques (O) comprend un traitement d'oxydation des composés organiques aromatiques (O) en composés organiques non aromatiques (NA), en présence d' H₂O₂, ladite étape d'oxydation étant de préférence un traitement d'oxydation réalisé en présence d'UV ou un traitement dit « fenton », en présence d'un agent oxydant et éventuellement de fer (II) et/ou fer (III).

7. Procédé selon l'une quelconque des revendications précédentes, **caractérisé en ce que** le procédé comprend une étape d'ajustement du pH de la solution aqueuse (A) à une valeur inférieure à 7, et de préférence entre 2 et 6.

8. Procédé selon l'une quelconque des revendications précédentes, **caractérisé en ce qu'**il comprend :
a1) éventuellement l'ajustement du pH de la solution aqueuse (A) comprenant au moins un sel de sulfate SO₄²⁻ solubilisé et au moins un composé organique aromatique, à une valeur inférieure à 7, et de préférence entre 2 et 6,
b1) l'élimination ou la séparation des composés organiques aromatiques (O) par au moins un traitement d'oxydation des composés organiques aromatiques (O) en composés organiques non aromatiques (NA), par exemple jusqu'à la production de CO₂, en présence d'un agent oxydant, qui est de préférence H₂O₂, ledit traitement d'oxydation étant de préférence réalisé en présence d'UV, ou par au moins un traitement d'adsorption sur un substrat, par exemple sur du charbon actif, pour obtenir une solution (A-O),
c1) la concentration des ions sulfates dans la solution (A-O) issue de l'étape b1), la cristallisation/précipitation du sel de sulfate solide (S) sous forme au moins partiellement anhydre à une température supérieure à la température limite de solubilité du sel de sulfate dans la solution aqueuse (A-O), et la séparation et la récupération du sel de sulfate solide (S) au moins partiellement anhydre, et la récupération d'une solution (A-O-S),
d1) éventuellement l'élimination ou la séparation des composés organiques aromatiques (O) résiduels dans la solution aqueuse (A-O-S) issue de l'étape c1) par un biotraitement par mise en contact des composés organiques aromatiques (O) résiduels en présence de bactéries dégradant lesdits composés organiques aromatiques (O), ou l'élimination ou la séparation des composés organiques aromatiques (O) résiduels dans la solution aqueuse (A-O-S) issue de l'étape c1) par au moins un traitement d'oxydation des composés organiques aromatiques (O) en composés organiques non aromatiques (NA), en présence d'un agent oxydant, qui est de préférence H₂O₂, ledit traitement d'oxydation étant de préférence réalisé en présence d'UV,
e1) éventuellement l'ajustement du pH de la solution aqueuse (A-O-S) issue de l'étape c1), éventuellement d1), à une valeur comprise entre 6 et 8.

9. Procédé selon l'une quelconque des revendications 1 à 7, **caractérisé en ce qu'**il comprend :
a2) éventuellement l'ajustement du pH de la solution aqueuse (A) comprenant au moins un sel de sulfate SO₄²⁻ solubilisé et au moins un composé organique aromatique, à une valeur de pH acide, basique, ou neutre,
b2) la concentration des ions sulfates dans la solution aqueuse (A), la cristallisation/précipitation du sel de sulfate solide (S) sous forme au moins partiellement anhydre à une température supérieure à la température limite de solubilité du sel de sulfate dans la solution aqueuse (A), et la séparation et la récupération du sel de sulfate solide (S) au moins partiellement anhydre, et la récupération d'une solution (A-S),
c2) l'élimination ou la séparation des composés organiques aromatiques (O) de la solution (A-S) issue de l'étape b2) par au moins un traitement d'oxydation des composés organiques aromatiques (O) en composés organiques non aromatiques, en présence d'un agent oxydant, qui est de préférence H₂O₂, ledit traitement d'oxydation étant de préférence réalisé en présence d'UV, ou par au moins un traitement d'adsorption sur un substrat, par exemple sur du charbon actif, et la récupération d'une solution (A-O-S),
d2) éventuellement l'ajustement du pH de la solution aqueuse (A-O-S) issue de l'étape c2) à une valeur comprise entre 6 et 8.

10. Procédé selon l'une quelconque des revendications 1 à 7, **caractérisé en ce qu'**il comprend
a3) éventuellement l'ajustement du pH de la solution aqueuse (A) comprenant au moins un sel de sulfate SO₄²⁻ solubilisé et au moins un composé organique aromatique (O), à une valeur de pH acide, basique, ou neutre,
b3) la concentration des ions sulfates dans la solution aqueuse (A), la cristallisation/précipitation du sel de sulfate solide (S) sous forme au moins partiellement anhydre à une température supérieure à la température limite de solubilité du sel de sulfate dans la solution aqueuse (A), c3) la récupération d'une solution aqueuse comprenant un sel de sulfates solide (S) sous forme au moins partiellement anhydre,
d3) l'incinération ou le traitement thermique à une température supérieure à 250°C, et de préférence supérieure à 300°C de la solution aqueuse issue de l'étape c3) pour éliminer l'eau de la solution aqueuse (A) et au moins partiellement les composés organiques (O), et la récupération d'un sel de sulfate SO₄²⁻ (S) solide sous forme anhydre.

11. Procédé de purification d'un sel de sulfate sous forme solide et de purification d'un effluent d'un procédé de production d'un composé de formule (I) défini selon la revendication 1, ledit procédé étant **caractérisé en ce que** l'effluent est une solution aqueuse (A) comprenant au moins un sel de sulfate SO₄²⁻ (S) solubilisé et au moins un composé organique aromatique (O) formé lors du procédé de production du composé (I), ledit procédé comprenant au moins une étape (i) de récupération d'un sel de sulfate (S) solide sous forme au moins partiellement anhydre séparément de la solution aqueuse (A), et au moins une étape (ii) de séparation ou d'élimination des composés organiques aromatiques (O) de la solution aqueuse (A), telles que définies selon l'une quelconque des revendications 1 à 10.

## Patentansprüche

1. Verfahren zur Behandlung einer wässrigen Lösung (A) aus einem Verfahren zur Herstellung einer Verbindung der Formel (I): 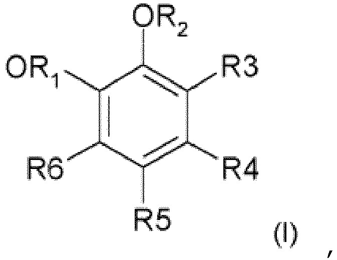 wobei R1 und R2 gleich oder verschieden und aus Wasserstoff und C1-C5-Alkyl ausgewählt sind oder R1 und R2 zusammen eine Methylengruppe bilden und wobei R3, R4, R5 und R6, die unabhängig voneinander gleich oder verschieden sind, aus den Folgenden ausgewählt sind: einem Wasserstoffatom, einer Hydroxygruppe (-OH), einer Alkoxygruppe (-OR), einer Alkoholgruppe (-ROH), einer Aldehydgruppe (-CHO), einer Ketogruppe (-C(=O)R), einer Säuregruppe (-COOH), einer Nitrilgruppe (-CN), einer geraden oder verzweigten, gesättigten oder ungesättigten C1-C6-Alkylkette, die gegebenenfalls einen oder mehrere Substituenten an endständiger oder seitlicher Position oder eine oder mehrere Funktionen in der Alkylkette umfasst, wobei R ein C1-C5-Alkyl ist, **dadurch gekennzeichnet, dass** die wässrige Lösung (A) mindestens ein gelöstes Sulfatsalz SO₄²⁻ (S) und mindestens eine aromatische organische Verbindung (O) umfasst, die sich während des Verfahrens zur Herstellung der Verbindung (I) gebildet hat, und **dadurch gekennzeichnet, dass** das Verfahren mindestens einen Schritt (i) der Gewinnung eines festen Sulfatsalzes (S) in zumindest teilweise wasserfreier Form, getrennt von der wässrigen Lösung (A), umfasst und mindestens einen Schritt (ii) der Abtrennung oder Beseitigung der aromatischen organischen Verbindungen (O) aus der wässrigen Lösung (A) umfasst, wobei das Verfahren das mindestens einmalige Durchführen des Schritts (i) und des Schritts (ii) umfasst, damit die organischen Verbindungen (O) und das Sulfatsalz SO₄²⁻ (S) zumindest teilweise aus der wässrigen Lösung (A) abgetrennt werden; wobei der Schritt (ii) der Beseitigung oder Abtrennung der aromatischen organischen Verbindungen (O) vor dem Schritt (i) der Gewinnung des festen Sulfatsalzes (S) in zumindest teilweise wasserfreier Form durchgeführt wird, wobei der Schritt (ii) der Beseitigung oder Abtrennung der aromatischen organischen Verbindungen (O) eine Oxidationsbehandlung der aromatischen organischen Verbindungen (O) zu nicht-aromatischen organischen Verbindungen (NA) in Gegenwart eines Oxidationsmittels und/oder eine Biobehandlung durch Inkontaktbringen der aromatischen organischen Verbindungen (O) mit Bakterien, die die aromatischen organischen Verbindungen (O) abbauen, und/oder einen Schritt der Adsorption der aromatischen organischen Verbindungen (O) an Aktivkohle und/oder eine oder mehrere Flüssig-Flüssig-Extraktionen umfasst.

2. Verfahren nach einem der vorhergehenden Ansprüche, **dadurch gekennzeichnet, dass** der Schritt (i) der Gewinnung des festen Sulfatsalzes (S) in zumindest teilweise wasserfreier Form das Aufkonzentrieren (ia) der Sulfationen in der wässrigen Lösung (A) durch Beseitigung oder Abtrennung zumindest eines Teils des Wassers aus der wässrigen Lösung (A) umfasst, wobei das Aufkonzentrieren (ia) bei einer Temperatur oberhalb der Löslichkeitsgrenztemperatur des Sulfatsalzes in der wässrigen Lösung (A) und vorzugsweise bei einer Temperatur über 40 °C und bevorzugt über 45 °C und noch stärker bevorzugt über 50 °C durchgeführt wird.

3. Verfahren nach einem der vorhergehenden Ansprüche, **dadurch gekennzeichnet, dass** die Temperatur der wässrigen Lösung (A) eine Temperatur vor der Behandlung, die so genannte Temperatur bei Produktionsende, von mehr als 40 °C und vorzugsweise mehr als 45 °C und noch stärker bevorzugt mehr als 50 °C ist, und dadurch, dass das Aufkonzentrieren gemäß Schritt (ia) bei der Temperatur bei Produktionsende plus oder minus 20 °C und vorzugsweise plus oder minus 10 °C, jedoch über 40 °C, durchgeführt wird.

4. Verfahren nach einem der vorhergehenden Ansprüche, **dadurch gekennzeichnet, dass** der Schritt (i) der Gewinnung des festen Sulfatsalzes (S) in zumindest teilweise wasserfreier Form Folgendes umfasst: (ia) Aufkonzentration der Sulfationen in der wässrigen Lösung (A), (ib) eine Kristallisation/Ausfällung des festen Sulfatsalzes (S) in zumindest teilweise wasserfreier Form, (ic) die Abtrennung des zumindest teilweise wasserfreien festen Sulfatsalzes (S) von der wässrigen Lösung (A) und (id) die Gewinnung des zumindest teilweise wasserfreien festen Sulfatsalzes (S), wobei die Schritte (ia), (ib) und (ic) bei einer Temperatur oberhalb der Löslichkeitsgrenztemperatur des Sulfatsalzes in der wässrigen Lösung (A) durchgeführt werden.

5. Verfahren nach einem der Ansprüche 1 bis 4, **dadurch gekennzeichnet, dass** es Folgendes umfasst:
- mindestens einen Schritt (i) der Gewinnung des festen Sulfatsalzes (S) in zumindest teilweise wasserfreier Form, um das feste Sulfatsalz (S) getrennt von der wässrigen Lösung (A) zu gewinnen, wobei der Schritt (i) einen Schritt der zumindest teilweisen Abtrennung der Sulfationen in Form eines zumindest teilweise wasserfreien festen Salzes aus der wässrigen Lösung (A) umfasst,
- die Gewinnung einer Lösung (A-S), die dem Schritt der zumindest teilweisen Abtrennung der Sulfationen unterzogen wurde,
- mindestens einen Schritt (ii) der Beseitigung oder Abtrennung der aromatischen organischen Verbindungen (O) aus der wässrigen Lösung (A), um die organischen Verbindungen (O) aus der wässrigen Lösung (A) zu beseitigen oder abzutrennen, und
- die Gewinnung einer Lösung (A-O), die dem Schritt (ii) der zumindest teilweisen Abtrennung oder Beseitigung der aromatischen organischen Verbindungen unterzogen wurde, wobei das Verfahren das mindestens einmalige Durchführen des Schritts (i) und des Schritts (ii) umfasst, damit schließlich eine wässrige Lösung (AO-S) gewonnen wird, in der das Sulfatsalz (S) und die aromatischen organischen Verbindungen (O) zumindest teilweise beseitigt oder abgetrennt wurden,
**dadurch gekennzeichnet, dass** der Schritt (ii) der Beseitigung oder Abtrennung der aromatischen organischen Verbindungen (O) vor dem Schritt (i) der Gewinnung des festen Sulfatsalzes (S) in zumindest teilweise wasserfreier Form durchgeführt wird.

6. Verfahren nach einem der Ansprüche 4 bis 5, **dadurch gekennzeichnet, dass** der Schritt (ii) der Beseitigung oder Abtrennung der aromatischen organischen Verbindungen (O) eine Oxidationsbehandlung der aromatischen organischen Verbindungen (O) zu nicht-aromatischen organischen Verbindungen (NA) in Gegenwart von H₂O₂ umfasst, wobei es sich bei dem Oxidationsschritt vorzugsweise um eine in Gegenwart von UV durchgeführte Oxidationsbehandlung oder eine so genannte Fenton-Behandlung in Gegenwart eines Oxidationsmittels und gegebenenfalls von Eisen(II) und/oder Eisen(III) handelt.

7. Verfahren nach einem der vorhergehenden Ansprüche, **dadurch gekennzeichnet, dass** das Verfahren einen Schritt der Einstellung des pH-Werts der wässrigen Lösung (A) auf einen Wert von weniger als 7 und vorzugsweise zwischen 2 und 6 umfasst.

8. Verfahren nach einem der vorhergehenden Ansprüche, **dadurch gekennzeichnet, dass** es Folgendes umfasst:
a1) gegebenenfalls das Einstellen des pH-Werts der wässrigen Lösung (A), die mindestens ein gelöstes Sulfatsalz SO₄²⁻ und mindestens eine aromatische organische Verbindung enthält, auf einen Wert von weniger als 7 und vorzugsweise zwischen 2 und 6,
b1) die Beseitigung oder Abtrennung der aromatischen organischen Verbindungen (O) durch mindestens eine Oxidationsbehandlung der aromatischen organischen Verbindungen (O) zu nicht-aromatischen organischen Verbindungen (NA), beispielsweise bis zur Produktion von CO₂, in Gegenwart eines Oxidationsmittels, bei dem es sich vorzugsweise um H₂O₂ handelt, wobei die Oxidationsbehandlung vorzugsweise in Gegenwart von UV durchgeführt wird, oder durch mindestens eine Behandlung durch Adsorption an ein Substrat, zum Beispiel Aktivkohle, um eine Lösung (A-O) zu erhalten,
c1) das Aufkonzentrieren der Sulfationen in der aus Schritt b1) erhaltenen Lösung (A-O), die Kristallisation/Ausfällung des festen Sulfatsalzes (S) in zumindest teilweise wasserfreier Form bei einer Temperatur oberhalb der Löslichkeitsgrenztemperatur des Sulfatsalzes in die wässrige Lösung (A-O) und die Abtrennung und Gewinnung des zumindest teilweise wasserfreien festen Sulfatsalzes (S) sowie die Gewinnung einer Lösung (A-O-S),
d1) gegebenenfalls die Beseitigung oder Abtrennung der restlichen aromatischen organischen Verbindungen (O) in der wässrigen Lösung (A-O-S) aus Schritt c1) durch eine Biobehandlung durch Inkontaktbringen der restlichen aromatischen organischen Verbindungen (O) mit Bakterien, die die aromatischen organischen Verbindungen (O) abbauen, oder die Beseitigung oder Abtrennung der restlichen aromatischen organischen Verbindungen (O) in der wässrigen Lösung (A-O-S) aus Schritt c1) durch mindestens eine Oxidationsbehandlung der aromatischen organischen Verbindungen (O) zu nicht-aromatischen organischen Verbindungen (NA) in Gegenwart eines Oxidationsmittels, bei dem es sich vorzugsweise um H₂O₂ handelt, wobei die Oxidationsbehandlung vorzugsweise in Gegenwart von UV durchgeführt wird,
e1) gegebenenfalls das Einstellen des pH-Werts der wässrigen Lösung (A-O-S) aus Schritt c1), gegebenenfalls aus Schritt d1) auf einen Wert zwischen 6 und 8.

9. Verfahren nach einem der Ansprüche 1 bis 7, **dadurch gekennzeichnet, dass** es Folgendes umfasst:
a2) gegebenenfalls das Einstellen des pH-Werts der wässrigen Lösung (A), die mindestens ein gelöstes Sulfatsalz SO₄²⁻ und mindestens eine aromatische organische Verbindung umfasst, auf einen sauren, basischen oder neutralen pH-Wert,
b2) das Aufkonzentrieren der Sulfationen in der wässrigen Lösung (A), die Kristallisation/Ausfällung des festen Sulfatsalzes (S) in zumindest teilweise wasserfreier Form bei einer Temperatur oberhalb der Löslichkeitsgrenztemperatur des Sulfatsalzes in der wässrigen Lösung (A) und die Abtrennung und Gewinnung des zumindest teilweise wasserfreien festen Sulfatsalzes (S) und die Gewinnung einer Lösung (A-S),
c2) die Beseitigung oder Abtrennung der aromatischen organischen Verbindungen (O) aus der Lösung (A-S), die aus Schritt b2) stammt, durch mindestens eine Oxidationsbehandlung der aromatischen organischen Verbindungen (O) zu nicht-aromatischen organischen Verbindungen in Gegenwart eines Oxidationsmittels, bei dem es sich vorzugsweise um H₂O₂ handelt, wobei die Oxidationsbehandlung vorzugsweise in Gegenwart von UV durchgeführt wird, oder durch mindestens eine Behandlung durch Adsorption an ein Substrat, zum Beispiel Aktivkohle, und die Gewinnung einer Lösung (A-O-S),
d2) gegebenenfalls das Einstellen des pH-Werts der wässrigen Lösung (A-O-S) aus Schritt c2) auf einen Wert zwischen 6 und 8.

10. Verfahren nach einem der Ansprüche 1 bis 7, **dadurch gekennzeichnet, dass** es Folgendes umfasst:
a3) gegebenenfalls das Einstellen des pH-Werts der wässrigen Lösung (A), die mindestens ein gelöstes Sulfatsalz SO₄²⁻ und mindestens eine aromatische organische Verbindung umfasst, auf einen sauren, basischen oder neutralen pH-Wert,
b3) das Aufkonzentrieren der Sulfationen in der wässrigen Lösung (A), die Kristallisation/Ausfällung des festen Sulfatsalzes (S) in zumindest teilweise wasserfreier Form bei einer Temperatur oberhalb der Löslichkeitsgrenztemperatur des Sulfatsalzes in der wässrigen Lösung (A),
c3) die Gewinnung einer wässrigen Lösung, die ein festes Sulfatsalz (S) in zumindest teilweise wasserfreier Form umfasst,
d3) die Verbrennung oder thermische Behandlung bei einer Temperatur von mehr als 250 °C und vorzugsweise mehr als 300 °C der wässrigen Lösung aus Schritt c3), um das Wasser aus der wässrigen Lösung (A) und zumindest teilweise die organischen Verbindungen (O) zu beseitigen, und die Gewinnung eines festen Sulfatsalzes SO₄²⁻ (S) in wasserfreier Form.

11. Verfahren zur Reinigung eines Sulfatsalzes in fester Form und zur Reinigung eines Abstroms aus einem Verfahren zur Herstellung einer Verbindung der Formel (I) nach Anspruch 1, wobei das Verfahren **dadurch gekennzeichnet ist, dass** der Abstrom eine wässrige Lösung (A) ist, die mindestens ein gelöstes Sulfatsalz SO₄²⁻ und mindestens eine aromatische organische Verbindung (O) umfasst, die sich während des Verfahrens zur Herstellung von Verbindung (I) gebildet hat, wobei das Verfahren mindestens einen Schritt (i) der Gewinnung eines festen Sulfatsalzes (S) in zumindest teilweise wasserfreier Form, getrennt von der wässrigen Lösung (A), und mindestens einen Schritt (ii) der Abtrennung oder Beseitigung der aromatischen organischen Verbindungen (O) aus der wässrigen Lösung (A) nach einem der Ansprüche 1 bis 10 umfasst.

## Claims

1. Process for treating an aqueous solution (A) derived from a process for producing a compound of formula (I): 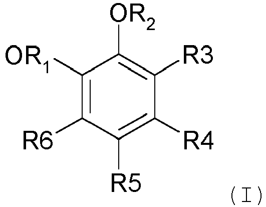 in which R1 and R2 are identical or different and chosen from hydrogen and C1-C5 alkyl, or R1 and R2 together form a methylene group, and in which R3, R4, R5 and R6, which may be identical or different, are independently chosen from: a hydrogen atom, a hydroxyl group (-OH), an alkoxy group (-OR), an alcohol group (-ROH), an aldehyde group (-CHO), a ketone group (-C(=O)R), an acid group (-COOH), a nitrile group (-CN), a linear or branched, saturated or unsaturated C1-C6 alkyl chain, optionally comprising one or more substituents in an end or side position or one or more functions in said alkyl chain, R being a C1-C5 alkyl, **characterized in that** the aqueous solution (A) comprises at least one dissolved sulfate SO₄²⁻ salt (S) and at least one aromatic organic compound (O) formed during the process for producing compound (I), and **characterized in that** the process comprises at least one step (i) of recovery of a solid sulfate salt (S) in at least partially anhydrous form separately from the aqueous solution (A), and comprises at least one step (ii) of separation or removal of the aromatic organic compounds (O) from the aqueous solution (A), said process comprising the implementation at least once of said step (i) and of said step (ii) in order to at least partially separate the organic compounds (O) and the sulfate salt SO₄²⁻ (S) from the aqueous solution (A), in which step (ii) of removal or separation of the aromatic organic compounds (O) is performed before step (i) of recovery of the solid sulfate salt (S) in at least partially anhydrous form, in which step (ii) of removal or separation of the aromatic organic compounds (O) comprises an oxidation treatment of the aromatic organic compounds (O) to non-aromatic organic compounds (NA), in the presence of an oxidizing agent, and/or a biotreatment by placing the aromatic organic compounds (O) in contact in the presence of bacteria which degrade said aromatic organic compounds (O), and/or a step of adsorption of the aromatic organic compounds (O) on active charcoal, and/or one or more liquid-liquid extractions.

2. Process according to the preceding claim, **characterized in that** step (i) of recovery of the solid sulfate salt (S) in at least partially anhydrous form comprises the concentration (ia) of the sulfate ions in said aqueous solution (A) by removal or separation of at least some of the water from the aqueous solution (A), said concentration (ia) being performed at a temperature above the solubility limit temperature of the sulfate salt in the aqueous solution (A), and preferably at a temperature above 40°C, preferably above 45°C and more preferably above 50°C.

3. Process according to either of the preceding claims, **characterized in that** the temperature of the aqueous solution (A) is at a temperature before treatment, known as the production end temperature, of greater than 40°C, preferably greater than 45°C and more preferably greater than 50°C, and **in that** the concentration according to step (ia) is performed at the production end temperature plus or minus 20°C and preferably plus or minus 10°C, but greater than 40°C.

4. Process according to any one of the preceding claims, **characterized in that** step (i) of recovery of the solid sulfate salt (S) in at least partially anhydrous form comprises: (ia) concentration of the sulfate ions in the aqueous solution (A), (ib) crystallization/precipitation of the solid sulfate salt (S) in at least partially anhydrous form, (ic) separation of the at least partially anhydrous solid sulfate salt (S) from the aqueous solution (A), and (id) recovery of the at least partially anhydrous solid sulfate salt (S), said steps (ia), (ib) and (ic) being performed at a temperature above the solubility limit temperature of the sulfate salt in the aqueous solution (A).

5. Process according to any one of Claims 1 to 4, **characterized in that** it comprises:
- at least one step (i) of recovery of the solid sulfate salt (S) in at least partially anhydrous form to recover the solid sulfate salt (S) separately from the aqueous solution (A), said step (i) comprising a step of at least partial separation of the sulfate ions in the form of an at least partially anhydrous solid salt from the aqueous solution (A),
- the recovery of a solution (A-S) which has undergone the step of at least partial separation of the sulfate ions,
- at least one step (ii) of removal or separation of the aromatic organic compounds (O) from the aqueous solution (A) to remove or separate the organic compounds (O) from the aqueous solution (A), and
- the recovery of a solution (A-O) which has undergone step (ii) of at least partial separation or removal of the aromatic organic compounds,
said process comprising the implementation at least once of said step (i) and of said step (ii), in order finally to recover an aqueous solution (A-O-S) in which the sulfate salt (S) and the aromatic organic compounds (O) have been at least partially removed or separated, **characterized in that** step (ii) of removal or separation of the aromatic organic compounds (O) is performed before step (i) of recovery of the solid sulfate salt (S) in at least partially anhydrous form.

6. Process according to either of Claims 4 and 5, **characterized in that** step (ii) of removal or separation of the aromatic organic compounds (O) comprises an oxidation treatment of the aromatic organic compounds (O) to non-aromatic organic compounds (NA), in the presence of H₂O₂, said oxidation step preferably being an oxidation treatment performed in the presence of UV or a Fenton treatment, in the presence of an oxidizing agent and optionally of iron(II) and/or iron(III).

7. Process according to any one of the preceding claims, **characterized in that** the process comprises a step of adjusting the pH of the aqueous solution (A) to a value of less than 7, and preferably between 2 and 6.

8. Process according to any one of the preceding claims, **characterized in that** it comprises:
a1) optionally, adjustment of the pH of the aqueous solution (A) comprising at least one dissolved sulfate SO₄²⁻ salt and at least one aromatic organic compound, to a value of less than 7, and preferably between 2 and 6,
b1) removal or separation of the aromatic organic compounds (O) via at least one oxidation treatment of the aromatic organic compounds (O) to non-aromatic organic compounds (NA), for example up to the production of CO₂, in the presence of an oxidizing agent, which is preferably H₂O₂, said oxidation treatment preferably being performed in the presence of UV, or via at least one treatment of adsorption onto a substrate, for example onto active charcoal, to obtain a solution (A-O),
c1) concentration of the sulfate ions in the solution (A-O) derived from step b1), crystallization/precipitation of the solid sulfate salt (S) in at least partially anhydrous form at a temperature above the solubility limit temperature of the sulfate salt in the aqueous solution (A-O), separation and recovery of the at least partially anhydrous solid sulfate salt (S), and recovery of a solution (A-O-S),
d1) optionally, removal or separation of the residual aromatic organic compounds (O) in the aqueous solution (A-O-S) derived from step c1) via a biotreatment by placing the residual aromatic organic compounds (O) in contact in the presence of bacteria that degrade said aromatic organic compounds (O), or removal or separation of the residual aromatic organic compounds (O) in the aqueous solution (A-O-S) derived from step c1) via at least one oxidation treatment of the aromatic organic compounds (O) to non-aromatic organic compounds (NA), in the presence of an oxidizing agent, which is preferably H₂O₂, said oxidation treatment preferably being performed in the presence of UV,
e1) optionally, adjustment of the pH of the aqueous solution (A-O-S) derived from step c1), optionally d1), to a value of between 6 and 8.

9. Process according to any one of Claims 1 to 7, **characterized in that** it comprises:
a2) optionally, adjustment of the pH of the aqueous solution (A) comprising at least one dissolved sulfate SO₄²⁻ salt and at least one aromatic organic compound, to an acidic, basic or neutral pH value,
b2) concentration of the sulfate ions in the aqueous solution (A), crystallization/precipitation of the solid sulfate salt (S) in at least partially anhydrous form at a temperature above the solubility limit temperature of the sulfate salt in the aqueous solution (A), separation and recovery of the at least partially anhydrous solid sulfate salt (S), and recovery of a solution (A-S),
c2) removal or separation of the aromatic organic compounds (O) from the solution (A-S) derived from step b2) via at least one oxidation treatment of the aromatic organic compounds (O) to non-aromatic organic compounds,
in the presence of an oxidizing agent, which is preferably H₂O₂, said oxidation treatment preferably being performed in the presence of UV, or via at least one treatment of adsorption onto a substrate, for example onto active charcoal, and recovery of a solution (A-O-S),
d2) optionally, adjustment of the pH of the aqueous solution (A-O-S) derived from step c2) to a value of between 6 and 8.

10. Process according to any one of Claims 1 to 7, **characterized in that** it comprises:
a3) optionally, adjustment of the pH of the aqueous solution (A) comprising at least one dissolved sulfate SO₄²⁻ salt and at least one aromatic organic compound (O), to an acidic, basic or neutral pH value,
b3) concentration of the sulfate ions in the aqueous solution (A), crystallization/precipitation of the solid sulfate salt (S) in at least partially anhydrous form at a temperature above the solubility limit temperature of the sulfate salt in the aqueous solution (A), c3) recovery of an aqueous solution comprising a solid sulfate salt (S) in at least partially anhydrous form,
d3) incineration or heat treatment at a temperature above 250°C, and preferably above 300°C, of the aqueous solution derived from step c3) to remove the water from the aqueous solution (A) and, at least partially, the organic compounds (O), and recovery of a solid sulfate SO₄²⁻ salt (S) in anhydrous form.

11. Process for purifying a sulfate salt in solid form and for purifying an effluent from a process for producing a compound of formula (I) defined according to Claim 1, said process being **characterized in that** the effluent is an aqueous solution (A) comprising at least one dissolved sulfate SO₄²⁻ salt and at least one aromatic organic compound (O) formed during the process for producing compound (I), said process comprising at least one step (i) of recovery of a solid sulfate salt (S) in at least partially anhydrous form separately from the aqueous solution (A), and at least one step (ii) of separation or removal of the aromatic organic compounds (O) from the aqueous solution (A), as defined according to any one of Claims 1 to 10.
